# EUROPEAN PATENT APPLICATION

(11) **EP 1 944 196 A2**
(43) Date of publication of application: **16.07.2008**
(21) Application number: 08000291.8
(22) Date of filing: 09.01.2008
(51) Int. Cl.: B60Q 1/26

(54) **Emergency signalling panel for vehicles**

(30) Priority: 10.01.2007 ES 200700070 U
(71) Applicant: Rosillo López, Manuel, 08980 Sant Feliu de LLobregat Barcelona (ES)
(72) Inventor: Rosillo López, Manuel, 08980 Sant Feliu de LLobregat Barcelona (ES)
(74) Representative: Lauer, Joachim

(57) **Abstract**

The signalling panel includes: - a support base (1) or low support, - a top cover (2) made of translucent material, which houses various signal lighting equipments, - a height adjustment mechanism (3), fixed at its ends to the support base (1) and to the translucent cover (2), and - various means (41, 42, 43) for the activation of the above mentioned mechanism (3) between a non extended position, in which the cover (2) remains in a low position close or attached to the support base (1), and an extended position where the cover (2) is positioned vertically, over the lower support base (1). The mechanism (3) comprises various telescopic compound guides, at least, for the lower section (31) fixed to the support base (1) and a top section (32) fixed to the cover (2).

## Description

### Object of the invention

The present invention refers to an emergency signalling panel for vehicles, of the type which includes a low base for its permanent attachment to the roof of the vehicle and a top cover of translucent material that houses signal lighting equipment, and optionally audible signalling equipment.

### Background of the invention

The vehicles used by police forces, Fire Brigades, and Ambulance Services, among others, commonly have an emergency signalling panel, which includes a low base for permanent attachment to the vehicle, generally to the roof, and a translucent cover attached directly onto the aforementioned lower base, said translucent cover serving to protect the emergency signalling lights, and in some cases the sirens for audible signalling.

The position of the translucent cover, attached to the support base, determines that the above mentioned cover is close to the roof of the vehicle, exceeding it generally by a height of approximately twenty or thirty centimetres. This causes, especially in the case of car based vehicles, that the emergency signalling lighting projected by the panel may not be visible to other road users and can cause problems in certain circumstances, for example, when it is circulating in traffic or when a traffic check is undertaken.

### Description of the invention

The emergency signalling panel for vehicles object of this invention presents various constructive particularities orientated to allow the driver to regulate the height of the translucent cover with regard to the roof of the vehicle, lowering it to a height similar to that of the conventional panels or raising it to a higher level, so that the emergency signal lighting can be more easily seen by other vehicles.

This illuminated signalling panel, being of the aforementioned type, that is to say, of the type which comprises a base or low support for its attachment to the vehicle and a top cover of translucent material which serves to protect the signal lighting equipment, and optionally audible signalling equipment, presents the particularity of including a height regulation mechanism, attached at both ends to the base and to the top cover panel, and means of activating the above mentioned mechanism from an un-extended position, in which the panel sits in a low position close or attached to the support base, and an extended position in which the panel raises at a higher distance, vertically separated from the low support and over the above mentioned base.

A prevision has been made that the adjustable height mechanism could include telescopic compound guides, at least, for a lower section attached to the base, and an upper section attached to the cover panel and that the means of activation could be composed of a spindle mechanism driven by an electric motor attached, directly or indirectly, to the support base or to the translucent cover panel, and that acts on a nut attached, directly or indirectly, to the translucent cover or to the support base; since the above mentioned means provide a high fitting simplicity and can be powered by the vehicle's electrical system. Nevertheless, the use of other height adjustment mechanisms is not discounted, for example a scissor type mechanism, or other means of activation, for example hydraulic or pneumatic cylinders, which undertake the same function, and which are equivalent in functioning to that previously described.

### Description of the drawings

To complement the description that is undertaken and in order to ease understanding of the characteristics of the invention, this description is accompanied by a set of drawings in which, with illustrative and not limitative character, the following has been represented:
- Figure 1 shows a schematic perspective view of an example of embodiment of the emergency signalling panel, fitted to a vehicle and in which the translucent cover has been represented in the lower position.
- Figure 2 shows a schematic profile view of the signalling panel from the previous figure, partially sectioned to allow the observation of an example of embodiment of both the height adjustment mechanism and the means of activation.
- Figure 3 shows a schematic profile view of the emergency signalling panel fitted to a vehicle, with the translucent cover in the high position.
- Figure 4 shows an extended profile of the signalling panel partially sectioned and with the cover in the top position.
- Figure 5 shows a perspective view of the signalling panel fitted to a vehicle and with the translucent cover in high position.

### Preferred embodiments of the invention

As can be seen in the example of embodiment of the attached figures, the emergency signalling panel includes a support base (1) for attachment to the vehicle and a translucent cover (2) over the support base (1).

Inside the translucent cover (2) the emergency lighting has not been represented due to its being standard and not concerning the requested protection.

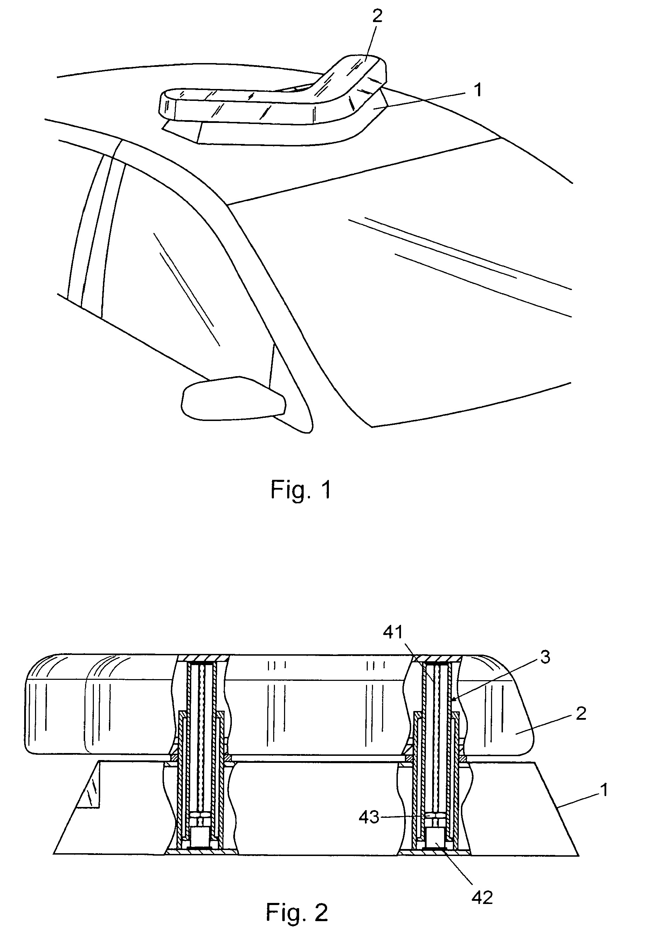

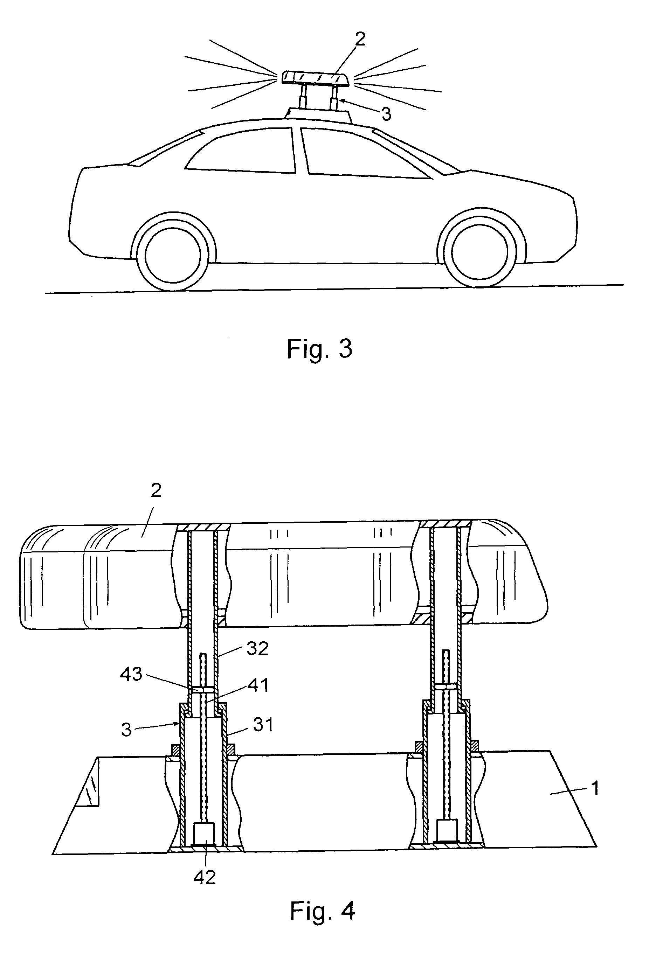

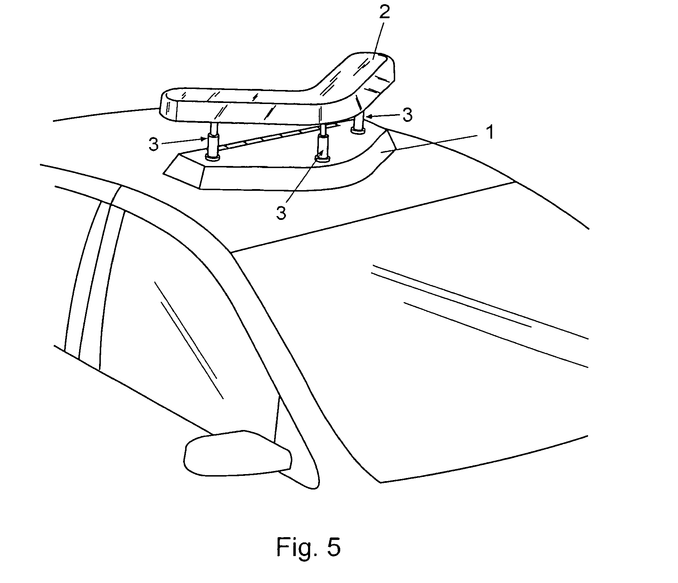

The support base (1) and the translucent cover (2) are connected by means of an adjustable length mechanism that, in the shown example, is represented with various telescopic guides (3) which include a low section (31) fixed to the support base (1) and a low section (32) fixed to the translucent cover (2). The above mentioned telescopic guides (3) allow the translucent cover (2) to move in a vertical direction, between a lower position represented in figures 1 and 2, and a top position shown in figures 3, 4 and 5, being this second position the most visible form of emergency lighting signalling.

To change the height of the translucent cover (2), the panel includes means of activation represented with a spindle (41) places axially inside each of the telescopic guides (3) and driven by an electric motor (42) connected to the support base (1) or to the lower section (31) of the guides (3) jointly to the above mentioned support base (3), the spindle (41) acting on a fixed nut (43),which cannot be turned on the top section (32) of the guides, jointly to the translucent cover (2).

The electrical motor (42) is powered by the vehicle's electrical system and controlled by means of a control placed inside the vehicle, so that the driver or his/her companion can change the height of the translucent cover (2) housing the emergency signalling lights.

Having described the nature of the invention, as well as an example of preferred embodiment, it is hereby certified to all interested parties that the materials, form, size and disposition of the described elements is subject to modification, only when it does not suppose an alteration of the essential characteristics of the invention that are claimed hereafter.

## Claims

1. Emergency signalling panel for vehicles of the type that includes a support base (1) or low support for its permanent attachment to the vehicle and a top cover (2) made of translucent material, which houses various signal lighting equipments, and optionally, audible signalling equipments; **characterized in that** it includes a height adjustment mechanism (3), fixed at its ends to the support base (1) and to the translucent cover (2), and various means (41, 42, 43) for the activation of the above mentioned mechanism (3) between a non extended position, in which the cover (2) remains in a low, position close or attached to the support base (1), and an extended position where the cover (2) is positioned vertically, over the lower support base (1).

2. Signalling panel, according to claim 1, **characterized in that** the adjustable height mechanism (3) comprises various telescopic compound guides, at least, for the lower section (31) fixed to the support base (1) and a top section (32) fixed to the cover (2).

3. Panel according to claim 1, **characterized in that** the means of activation includes a spindle (41) driven by an electric motor (42) fitted, directly or indirectly, to the support base (1) or to the translucent cover (2), and that acts on a nut (43) fixed directly or indirectly to the translucent cover (2) or to the support base (1).
